# EUROPEAN PATENT APPLICATION

(11) **EP 2 495 642 A1**
(43) Date of publication of application: **05.09.2012**
(21) Application number: 10826399.7
(22) Date of filing: 21.06.2010
(51) Int. Cl.: G06F 3/042, G06F 3/041, G09F 9/00

(54) **POSITION DETECTION SYSTEM, DISPLAY PANEL, AND DISPLAY DEVICE**

(30) Priority: 26.10.2009 JP 2009245725
(71) Applicant: Sharp Kabushiki Kaisha, Osaka-shi, Osaka 545-8522 (JP)
(72) Inventor: KITAGAWA Daiji, Osaka-shi, Osaka 545-8522 (JP); KUMADA Kouji, Osaka-shi, Osaka 545-8522 (JP)
(74) Representative: Goddar, Heinz J.
(86) International application number: PCT/JP2010/060435
(87) International publication number: WO 2011/052264

(57) **Abstract**

A position detection unit divides a plurality of LEDs (23A to 23C) into a plurality of sets, wherein one set includes a plurality of LEDs (23) (LED 23A and LED 23B), and one set includes a single LED (23C) only, for example, and turns on the LEDs on a per-set basis. The position detection unit further determines whether or not the next lighting will occur according to the total number of shadows that were caused by objects that were lit in the first lighting and that were detected by a line sensor unit.

## Description

### Technical Field

The present invention is related to a position detection system detecting a position of a target object, and a display panel (such as a liquid crystal display panel) provided with the position detection system, and furthermore, to a display device (such as a liquid crystal display device) provided with the display panel.

### Background Art

These days, some liquid crystal display devices are provided with a touch panel through which various instructions are able to be given to the liquid crystal display devices by touching the touch panel with a finger or the like (see, for example, Patent Literature 1). There are various mechanisms for the position detection system for detecting a position of a target object such as a finger on such a touch panel.

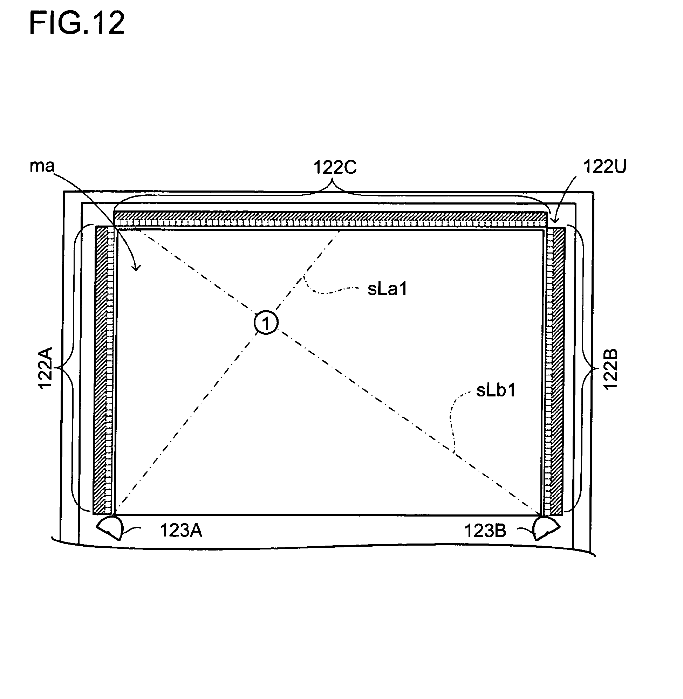

An example of the position detection system will be described with reference to FIG. 12. The position detection system as shown in the figure includes a line sensor unit 122U (a unit of line sensors 122A to 122C) arranged in the shape of a square bracket ("[" shape) and two LEDs 123 (123A and 123B) which supply light to an area ma surrounded by the line sensor unit 122U.

And, when a target object (1) such as a finger is placed in the area ma, light from the LEDs 123A and 123B is blocked so that a shadow of the target object (1) is formed, and the line sensor unit 122U detects the shadow. Furthermore, by using lines (connection lines sL) formed by connecting each shadow with a corresponding one of the LEDs 123 which has formed the shadow, the position of the target object (1) is determined (specifically, an intersection point of connection lines sLa1 and sLb1 is determined as the position of the target object (1)).

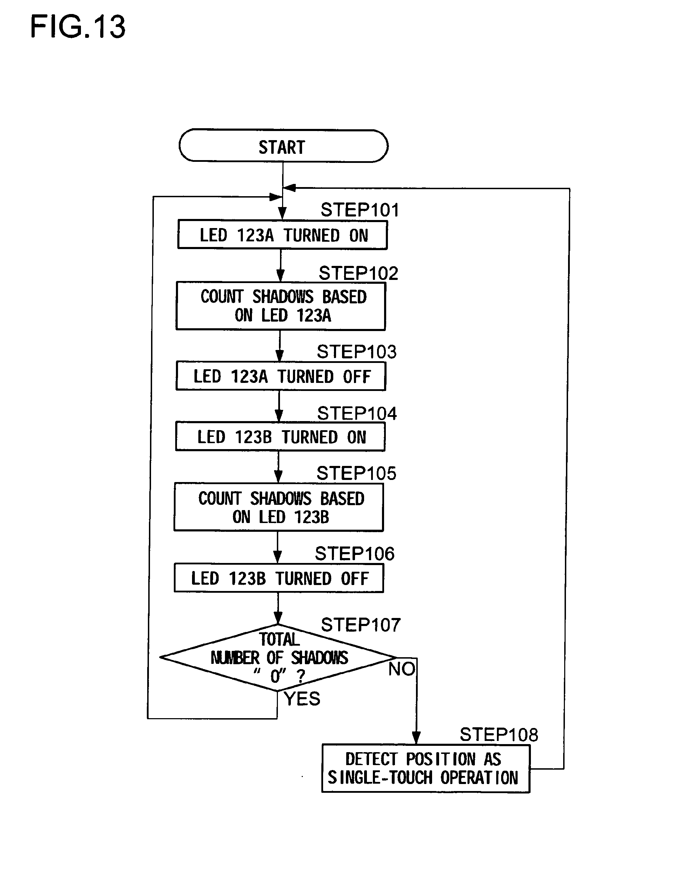

The detail of this position detecting process is described in the flow chart shown in FIG. 13. That is, first, the LED 123A is turned on (STEP 101), and then, shadows in the line sensor unit 122U are counted (STEP 102). Thereafter, the LED 123A is turned off (STEP 103), then the LED 123B is turned on (STEP 104), and then shadows in the line sensor unit 122U are counted again (STEP 105), and thereafter, the LED 123B is turned on (STEP 106).

In a case in which the number of shadows is "0", there is no target object, and thus no position detection is performed (YES in STEP 107), and in a case in which the number of shadows is "2", there is one target object, and thus position detection is carried out to detect the position of the target object (1) (No in STEP 107 → STEP 108; hereinafter, an operation in which one target object is placed in the area ma will be referred to as a single-touch operation).

### Citation List

### Patent Literature

Patent Literature 1: JP-A-2000-105671

### Summary of Invention

### Technical Problem

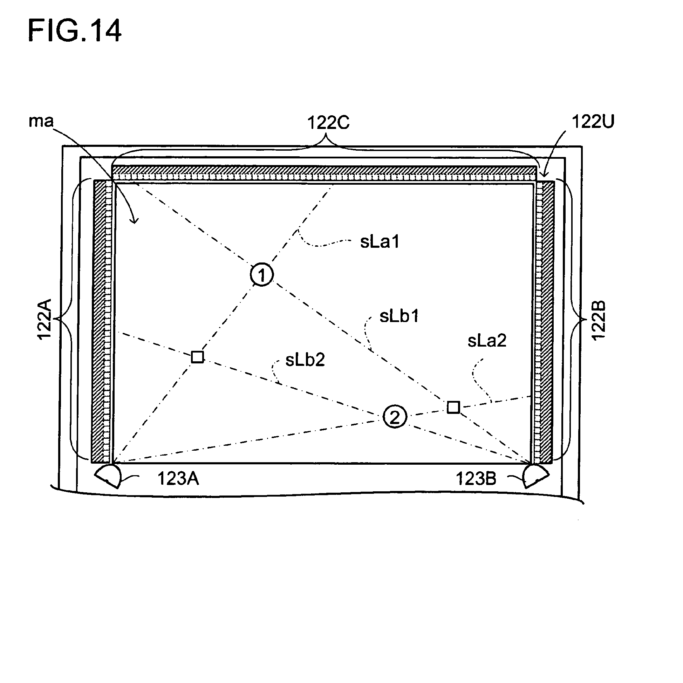

Now, with the above-described position detection system, if two target objects (1) and (2) are placed as shown in FIG. 14, connection lines sLa1 and sLb1 are formed with light received from the LED 123A and connection lines sLb1 and sLb2 are formed with light received from the LED 123B (hereinafter, an operation in which two target objects are placed in the area ma will be referred to as a multi-touch operation).

Then, as shown in FIG. 14, among intersection points resulting from the connection lines sLa1, sLb1, sLa2, and sLb2 intersecting each other, two intersection points (indicated by □) do not reflect the positions of the target objects (1) and (2). Thus, with this position detection system PM, it is impossible to accurately detect the positions of the target objects (1) and (2). What is more inconvenient, with this position detection system, as shown in the flow chart of FIG. 13, the LED 123A is turned on once and then turned off, and further, the LED 123B is turned on once and then turned off; thus, position detection takes comparatively a long time.

The present invention has been made to solve the above problems. And an object of the present invention is to provide a position detection system or the like which is capable of reducing time required to detect positions.

### Solution to Problem

According to an aspect of the present invention, a position detection system includes: a light source unit including a plurality of light sources; a light receiving sensor unit which is arranged in a surrounding shape and receives light from the light sources; and a position detection unit which detects, from light reception data of the light receiving sensor unit, a shadow of a target object which overlaps an area surrounded by the light receiving sensor unit, the position detection unit detecting a position of the target object by a triangulation method by using data based on the shadow.

In this position detection system, the position detection unit divides the plurality of light sources into a plurality of light source groups and performs lighting of the light sources on a group-by-group basis such that, according to a total number of shadows formed based on the target object at a first lighting and detected by the light receiving sensor unit, or according to a total number of shadows formed based on the target object at first and second lighting and detected by the light receiving sensor unit, the position detection unit determines whether or not to perform a next lighting.

This configuration makes it possible to change a time period for position detection according to the number of shadows. Thus, it is possible to reduce the time period necessary for position detection.

For example, different numbers of shadows are formed depending on whether there is no target object, there is one target object, or there are two target objects. Specifically, in a case in which one of the plurality of light source groups is a two-light-source type light source group including two light sources, and a total number of shadows at the first lighting in which the two-light-source type light source group is turned on is "0" or "2", it is preferable that a next lighting, which would be a second lighting, be not performed and that a position of a single target object be detected by using data of the shadows formed when the light sources included in the two-light-source type light source group are turned on.

In a case in which the total number of shadows based on the two light sources is "0", the number of target objects is normally "0", and thus naturally, position detection does not need to be performed. In a case in which the total number of shadows based on the two light sources is "2", the number of target objects is "1", and thus, the position of the target object is detected soon with comparatively simple position detection. Thus, with such a position detection system, in comparison with, for example, a position detection system in which all light sources need to be turned on one by one despite a single target object, the position of the target object can be detected sooner.

On the other hand, in a case in which three or more shadows are formed at the first lighting in which the light sources included in the two-light-source type light source group are turned on, it is preferable that the next lighting in which a light source included in another light source group is turned on be performed as the second lighting, such that positions of a plurality of target objects are detected based on data of the shadows formed when the light sources of the two-light-source type light source group are turned on, data of shadows formed at the second lighting, and data of shadows formed at lighting performed after the second lighting by turning on a light source of another light source group.

In the case in which the total number of shadows based on two light sources is "3" or more, the number of target objects is normally "2" or more. Thus, only in such a case, the second lighting necessary for position detection is performed, and by using a shadow formed by the second lighting, the position detection unit detects positions of the plurality of target objects. That is, in the case of two or more target objects, positions of the two or more target objects are detected by prolonging the time period for the position detection, but otherwise, position detection is achieved in a shorter period of time.

Furthermore, in this position detection system, although three or more light sources are provided, the light sources are turned on at most twice for position detection. Thus, in comparison with, for example, a position detection system in which a position of a target object is detected by independently turning on three light sources (in short, performing lighting three times or more), the position detection system of the present invention is able to detect the position of the target object sooner.

Moreover, in the position detection system, it is preferable that two of the plurality of groups be one-light-source type light source groups each including one light source, and that, in a case in which the total number of shadows at a first lighting in which the light source of one of the one-light-source type light source groups is turned on and at a second lighting in which the light source of the other one of the one-light-source type light source groups is turned on is "0" or "2", a next lighting, which would be a third lighting, be not performed, and a position of a single target object is detected by using data of the shadows formed at the first and second lighting in which the light source of the one of the two one-light-source type light source groups and the light source of the other one of the two one-light-source type light source groups are turned on, respectively.

With such a position detection system, as described above, in the case in which the total number of shadows based on the two light sources is "0", there is no target object, and thus naturally, no position detection needs to be performed, and in the case in which the total number of shadows based on the two light sources is "2", there is one target object, and thus the position of the target object is able to be detected soon by comparatively easy position detection operation. Thus, with such a position detection system, in comparison with, for example, a position detection system in which all light sources need to be turned on one by one despite a single target object, the position of the target object is able to be detected sooner.

Moreover, in a case in which the total number of shadows formed at the first lighting in which the one of the one-light-source type light source groups is turned on and the second lighting in which the other one of the one-light-source type light source groups is turned on is three or more, it is preferable that the next lighting be performed as the third lighting, and that positions of a plurality of target objects be detected based on data of the shadows formed at the first and second lighting in which the light sources of the one-light-source type light source groups are turned on, and data of shadows formed at the third lighting, and data of shadows formed at lighting performed after the third lighting by turning on a light source of another one-light-source type light source group.

In this system, the target objects are constantly illuminated by a single light source, and thus darkness (shade) of the shadows detected by the light receiving sensor unit is dense. That is, the shadows formed by one light source are never illuminated by another light source. This helps enhance the accuracy with which the light receiving sensor unit detects shadows, and thus helps to detect the positions of the target objects with enhanced accuracy.

It should be noted that a display panel provided with the position detection system of the present invention is also included in the present invention, and further, a display device provided with such a display panel is also included in the present invention.

### Advantageous Effects of Invention

According to the position detection system of the present invention, it is possible to reduce position detection time (a period of time for position detection) necessary to detect the position of a target object.

### Brief Description of Drawings

[FIG. 1] A flow chart showing a position detection process performed by a position detection system;
[FIG. 2A] A plan view showing shadows of target objects when light is emitted from LEDs 23A and 23B;
[FIG. 2B] A plan view showing shadows of a target object when light is emitted from the LEDs 23A and 23B;
[FIG. 2C] A plan view showing shadows of target objects when light is emitted from an LED 23C;
[FIG. 3] A plan view predominantly showing the connection lines shown in FIGS. 2A and 2C;
[FIG. 4] A flow chart showing a position detection process performed by a position detection system;
[FIG. 5A] A plan view showing shadows of a target object when light is emitted from the LED 23A;
[FIG. 5B] A plan view showing shadows of target objects when light is emitted from the LED 23B;
[FIG. 5C] A plan view showing shadows of target objects when light is emitted from the LED 23C;
[FIG. 6] A sectional view showing part of a liquid crystal display device;
[FIG. 7] An illustrative diagram including a plan view of a position detection system and a block diagram of a microcomputer unit necessary for controlling the position detection system;
[FIG. 8A] A plan view showing a line sensor unit;
[FIG. 8B] A plan view showing a coordinate map area;
[FIG. 9A] A plan view showing a coordinate map area;
[FIG. 9B] An illustrative diagram including graphs showing signal intensities of a line sensor unit;
[FIG. 10] A plan view showing connection lines;
[FIG. 11] A sectional view showing part of a liquid crystal display device;
[FIG. 12] A plan view for illustrating position detection performed by a conventional position detection system in a single-touch operation;
[FIG. 13] A flow chart showing a position detection process performed by the conventional position detection system; and
[FIG. 14] A plan view for illustrating position detection performed by the conventional position detection system in a multi-touch operation.

### Description of Embodiments

### [First Embodiment]

Hereinafter, a first embodiment of the present invention will be described based on the accompanying drawings. Hatching, reference signs for members and the like may sometimes be omitted in a drawing for ease of description, and in such a case, a different drawing is to be referred to (for example, a later-described line sensor 22 may sometimes be indicated by a light receiving chip CP alone). On the other hand, hatching may be applied to drawings that is not sectional drawings for the sake of convenience. Further, a black dot in a drawing denotes a direction perpendicular to a plane of the drawing.

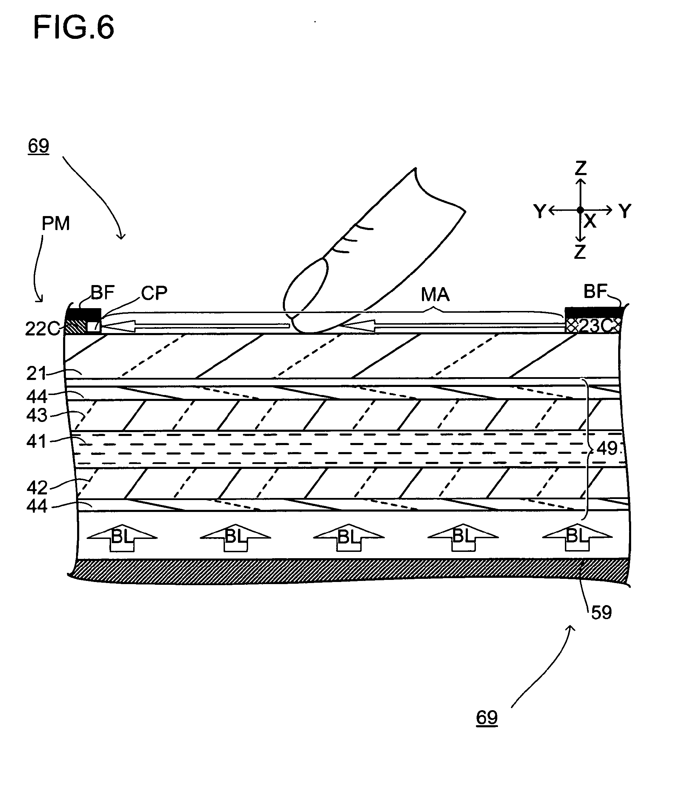

FIG. 6 is a sectional view showing part of a liquid crystal display device (display device) 69. As shown in this figure, the liquid crystal display device 69 includes a backlight unit (an illumination device) 59 and a liquid crystal display panel (display panel) 49.

The backlight unit 59 is an illumination device including a light source such as an LED (Light Emitting Diode) or a fluorescent tube, irradiating the liquid crystal display panel 49, which is a non-light-emitting display panel, with light (backlight light BL).

The liquid crystal display panel 49 which receives light includes an active matrix substrate 42 and a counter substrate 43 between which liquid crystal 41 is held. Further, in the active matrix substrate 42, although not illustrated, gate signal lines and source signal lines are arranged to intersect each other, and further, at each intersection point of the signal lines of the two types, a switching element (for example, a Thin Film Transistor) necessary for adjusting a voltage applied to the liquid crystal (liquid crystal layer) 41 is disposed.

Further, a polarization film 44 is fitted to a light receiving side of the active matrix substrate 42, and a polarization film 44 is fitted to a light exit side of the counter substrate 43. The liquid crystal display panel 49 configured as described above displays images by making use of change in optical transmittance caused when liquid crystal molecules 41 incline in response to applied voltages.

Further, the liquid crystal display panel 49 also includes a position detection system PM (note that the liquid crystal display panel 49 which includes the position detection system PM may be referred to as a touch panel 49). The position detection system PM is a system that detects where on the liquid crystal display panel 49 a finger as shown in FIG. 6 is located.

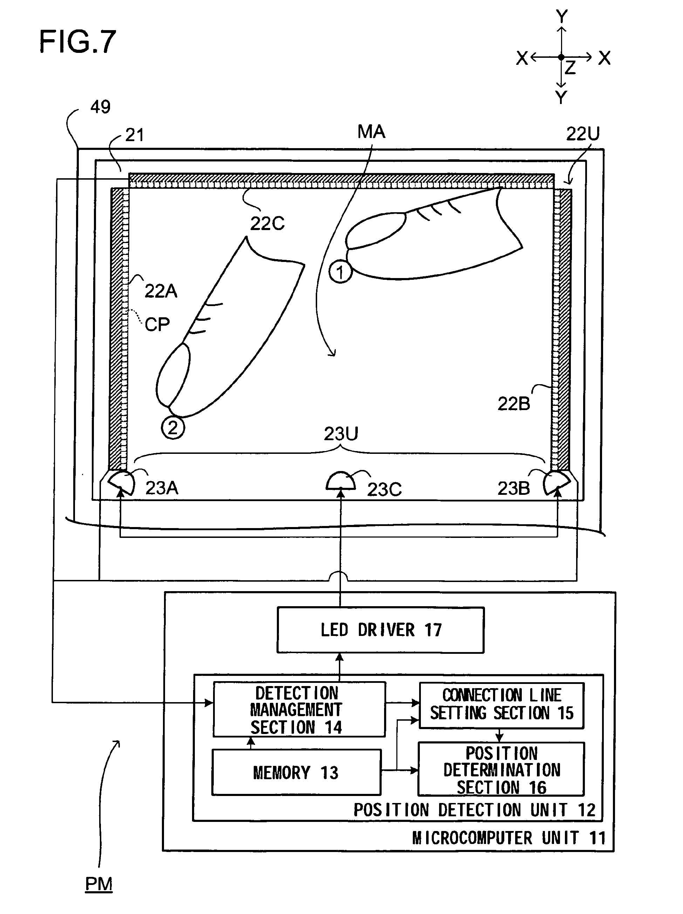

Here, the position detection system PM will be described in detail with reference to FIGS. 6 and 7 (FIG. 7 is an illustrative diagram including a plan view of the position detection system PM and a block diagram of a microcomputer unit 11 that is necessary for controlling the position detection system PM).

The position detection system PM includes a protection sheet 21, a line sensor unit (a light receiving sensor unit) 22U, an LED unit (a light source unit) 23U, and the microcomputer unit 11.

The protection sheet 21 covers the counter substrate 43 (specifically, the polarization film 44 on the counter substrate 43) of the liquid crystal display panel 49. When a target object such as a finger is placed on a display surface side of the liquid crystal display panel 49, the protection sheet 21, which is then located between the finger and the display surface, protects the liquid crystal display panel 49 from damages such as scratches.

The line sensor unit 22U is composed of three line sensors 22 (22A, 22B, 22C) arranged on the protection sheet 21, each of the line sensors 22 being composed of linearly arranged light receiving chips CP (note that the three line sensors 22A to 22C may be connected and integral with each other). Specifically, the line sensor unit 22U is formed by arranging the line sensors 22A to 22C so as to surround a given area (in a surrounding shape). However, the arrangement shape of the line sensor unit 22U is not limited to any specific shape, and the line sensor unit 22U may be arranged in any shape as long as it is arranged to surround a given area.

For example, as shown in FIG. 7, the line sensor unit 22U includes the line sensors 22A and 22B which are placed facing each other and a line sensor (a bridge-type linear light receiving sensor) 22C which is placed across the distance between the line sensor (a side-type linear light receiving sensor) 22A and the line sensor (a side-type light receiving sensor) 22B, such that the line sensors 22A to 22C are arranged to form the shape of a square bracket "[" surrounding a given area (that is, the line sensors 22A, 22C, and 22B are connected with each other into a square bracket shape).

The rectangular area surrounded by the line sensors 22A to 22C of the line sensor unit 22U will be referred to as a coordinate map area MA. A line direction of the line sensor 22C will be referred to as direction X, line directions of the line sensors 22A and 22B will be referred to as direction Y, and a direction intersecting directions X and Y (for example, at right angles) will be referred to as direction Z.

An LED unit 23U is composed of three LEDs 23 (23A to 23C) arranged in a row on the protection sheet 21. Specifically, in the LED unit 23U, the LEDs (point light sources) 23A to 23C are spaced from each other and arranged to face the line sensor 22C (that is, the LEDs 23A to 23C are arranged in line along the line direction of the line sensor 22C (direction X), at an opening portion of the square bracket shape in which the line sensor unit 22U is arranged.

The LEDs 23A to 23C are also arranged such that light (light source light) emitted therefrom travels along a surface of the protection sheet 21 (a direction along an XY-surface defined by directions X and Y), to be directed to the coordinate map area MA surrounded by the line sensors 22A to 22C.

Note that, since the LED 23A is disposed in the vicinity of an end of the line sensor 22A which is not adjacent to the line sensor 22C, the light emitted from the LED 23A reaches all over the coordinate map area MA. Furthermore, since the LED 23B is disposed in the vicinity of an end of the line sensor 22B which is not adjacent to the line sensor 22C, the light emitted from the LED 23B reaches all over the coordinate map area MA. Moreover, since the LED 23C is disposed between the end of the line sensor 22A and the end of the line sensor 22C, the light emitted from the LED 23C reaches all over the coordinate map area MA.

Here, it is preferable that the line sensor unit 22U (the line sensors 22A to 22C) and the LED unit 23U (that is, the LEDs 23A to 22C) each have a light blocking film BF affixed thereto for the purpose of preventing leakage of light to the outside. For example, as shown in FIG. 6, it is preferable that the light blocking film BF be affixed to an outer surface of each of the line sensors 22 facing outside, and to an outer surface of each of the LEDs 23 facing outside (FIG. 6 is a sectional view in which the line sensor 22C and the LED 23C are visibly illustrated).

The microcomputer unit 11 controls the position detection system PM, and includes an LED driver 17 and a position detection unit 12.

The LED driver 17 is a driver that supplies an operation current to the LEDs 23A to 23C of the LED unit 23U.

The position detection unit 12 includes a memory 13, a detection management section 14, a connection line setting section 15, and a position determination section 16.

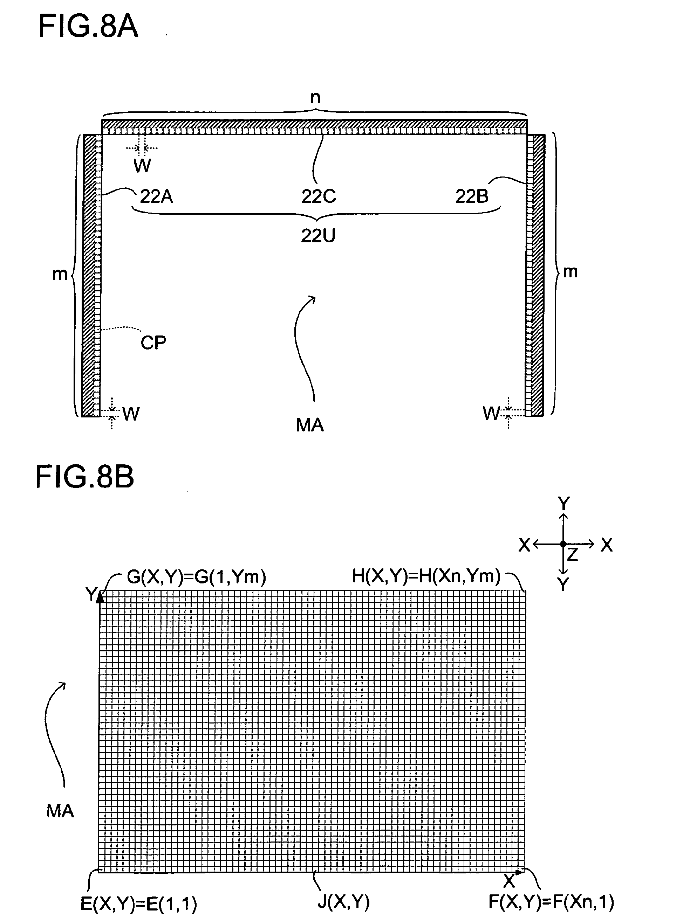

The memory 13 stores the coordinate map area MA for the purpose of determining the position of a target object such as a finger when the target object is placed on the coordinate map area MA. The coordinate map area MA is defined by, for example, as shown in FIG. 8A, how many light receiving chips CP incorporated in the line sensors 22A to 22C are arranged in the square bracket shape.

For example, assume that the numbers of light receiving chips CP included in the line sensor 22A, the line sensor 22B, and the line sensor 22C are m, m, and n, respectively (here, n and m are numbers that are not smaller than two). In the line sensor unit 22U, in the line sensors 22A and 22B arranged parallel to each other, an outermost light receiving chip CP of the line sensor 22A and an outermost light receiving chip CP of the line sensor 22B face each other along direction X. Furthermore, the line sensor 22C is placed across the distance between the outermost light receiving chips CP of the opposing line sensors 22A and 22B.

With this arrangement, the coordinate map area MA is divided into large division areas each having a width corresponding to the widths W of the light receiving chips CP of the line sensors 22A to 22C and extending from the line sensors 22A to 22C in directions perpendicular to the line directions of the line sensors 22A to 22C.

Specifically, lines defining the widths W of the light receiving chips CP of the line sensor 22A extend in direction X to form the number m of large division areas, lines defining the widths W of the light receiving chips CP of the line sensor 22B extend in direction X to form the number m of large division areas (note that the large division areas based on the light receiving chips CP included in the line sensor 22A and those based on the light receiving chips CP included in the line sensor 22B coincide with each other). Lines defining the widths W of the light receiving chips CP of the line sensor 22C extend in direction Y to form the number n of large division areas.

Then, assuming that areas where these large division areas overlap each other are small divisions, the coordinate map area MA is, as shown in FIG. 8B, totally covered with the small divisions (in other words, a coordinate map area MA having a matrix of small divisions is formed). This arrangement of the coordinate map area MA makes it possible to determine the position of a finger or the like on the coordinate map area MA.

Incidentally, a long-side direction of the rectangular coordinate map area MA is parallel to direction X and a short-side direction of the rectangular map area MA is parallel to direction Y. In the line sensor 22A and the line sensor 22C which are adjacent to each other, a small division defined by a large division area based on a light receiving chip CP located at an end of the line sensor 22A which is not adjacent to an end of the line sensor 22C and a large division area based on a light receiving chip CP positioned at an end of the line sensor 22C which is adjacent to an end of the line sensor 22A is set as a reference division E for the sake of convenience, a position of which being expressed as follows: E (X, Y) = E (1, 1) (note that a light emission point of the LED 23A can be construed as overlapping the position of the reference division E).

A small division located at a same position in direction Y (Y coordinate) as the reference division E and at a farthermost position from the reference division E in direction X (X coordinate) is set as a division F, a position of which is expressed as follows: F (X, Y) = F (Xn, 1) (here, n is a number equal to the number of light receiving chips CP included in the line sensor 22C). Note that a light emission point of the LED 23B can be construed as overlapping the position of the division F, and a light emission point of the LED 23C can be construed as overlapping a small division (a division J) at a center between the reference division E and the division F.

A small division located at a same position in direction X as the reference division E and at a farthermost position from the reference division E in direction Y is set as a division G, a position of which is expressed as follows: G (X, Y) = F (1, Ym) (here, m is a number equal to the number of light receiving chips CP included in the line sensor 22A or in the line sensor 22B). A small division located at a position that is farthermost from the reference division E both in direction X and direction Y is set as a division H, a position of which is expressed as follows: H (X, Y) = H (Xn, Ym).

The detection management section 14 controls the LED unit 23U via the LED driver 17, and judges a light receiving state of the line sensor unit 22U via the line sensor unit 22U. Specifically, the detection management section 14 outputs control signals to thereby control the light emission timing, the light emission time period, and the like of the LEDs 23A to 23C, and counts shadows formed in the line sensors 22A to 22C based on levels (signal intensities) of light reception signals of the line sensors 22A to 22C (shadow counting process).

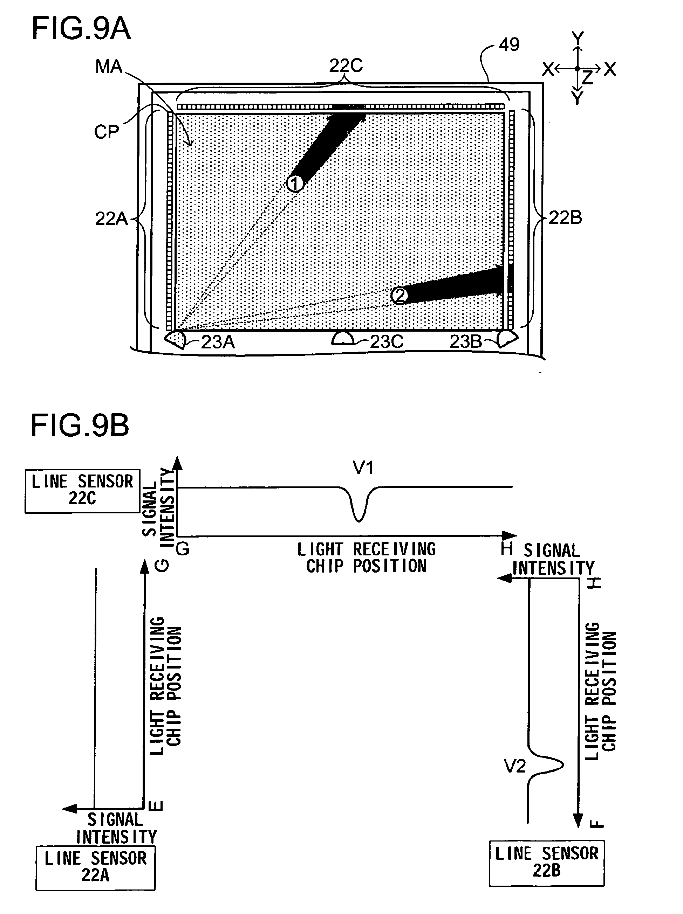

For example, as shown in FIG. 9A, in a case in which fingers or the like (target objects (1) and (2)) in the coordinate map area MA receive light from the LED 23A and thus shadows are formed, the shadows each extend along a direction in which light from the LED 23A travels, and respectively reach the line sensors 22B and 22C in the line sensor unit 22U (incidentally, in the figure, dense hatching portions respectively extending from the target objects (blocking objects) (1) and (2) are shadows, and light hatching portion around the dark hatching portions is an area irradiated with light, and the LED 23A, to which hatching is applied, is emitting light).

In this state, as shown in FIG. 9B, variation regions V1 and V2 appear in light reception data (light reception signals) in the line sensor unit 22U (incidentally, in the figure, graphs showing the light reception data are arranged corresponding to the positions of the line sensors 22A to 22C). The detection management section 14 counts shadows overlapping the line sensor unit 22U based on the number of variation regions V1 and V2 appearing in the light reception data (signal intensities of data signals) in the line sensor unit 22U.

Furthermore, the detection management section 14 determines which divisions of the outermost linear regions of the coordinate map area MA the shadows occupy, based on data (map data) of the coordinate map area MA obtained from the memory 13.

Specifically, the detection management section 14 determines which continuous divisions in a row of division area extending from the reference division E to the division G, in a row of division area extending from the division G to the division H, and in a row of division area extending from the division H to the division F the shadows occupy (determined division data setting process). Then, the detection management section 14 transmits, to the connection line setting section 15, data of the divisions (determined division data) determined in the coordinate map area MA.

The connection line setting section 15, in the coordinate map area MA, sets a connection line L (for example, La1, La2) that connects one point in a portion of the line sensor unit 22U where the shadow exists and the LED 23 which has formed the shadow (connection line setting process). That is, by using the determined division data transmitted from the detection management section 14, the connection line setting section 15 sets, in the coordinate map area MA, a connection line that connects one division among a plurality of divisions indicating the width of one shadow (for example, a division at a center of a plurality of linearly arranged divisions (determined division data) indicating the shadow) and a division indicating the light emission point of the LED 23.

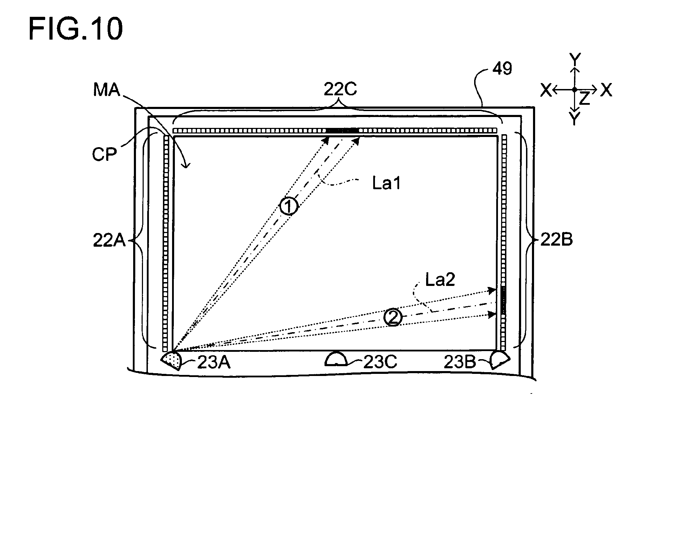

For example, in a case in which the LED 23A emits light, as shown in FIG. 10, in determined division data indicating the shadow of the target object (1), a division at a center between two end divisions and the reference division E which indicates the light emission point of the LED 23A are connected to thereby set the connection line La1. Furthermore, in a case in which the LED 23A emits light, in determined division data indicating the shadow of the target object (2), a division at a center between two end divisions and the reference division E which indicates the light emission point of the LED 23A are connected to thereby set the connection line La2.

Incidentally, as the one point, as shown in FIG. 10, for example, the midpoint in a width direction of the shadow in the line sensor 22, that is, the midpoint in the direction along which the light receiving chips CP to which the shadow reaches are arranged is used, but this is not meant as a limitation (the method of determining the position of a target object such as a finger by using the connection lines L will be described later).

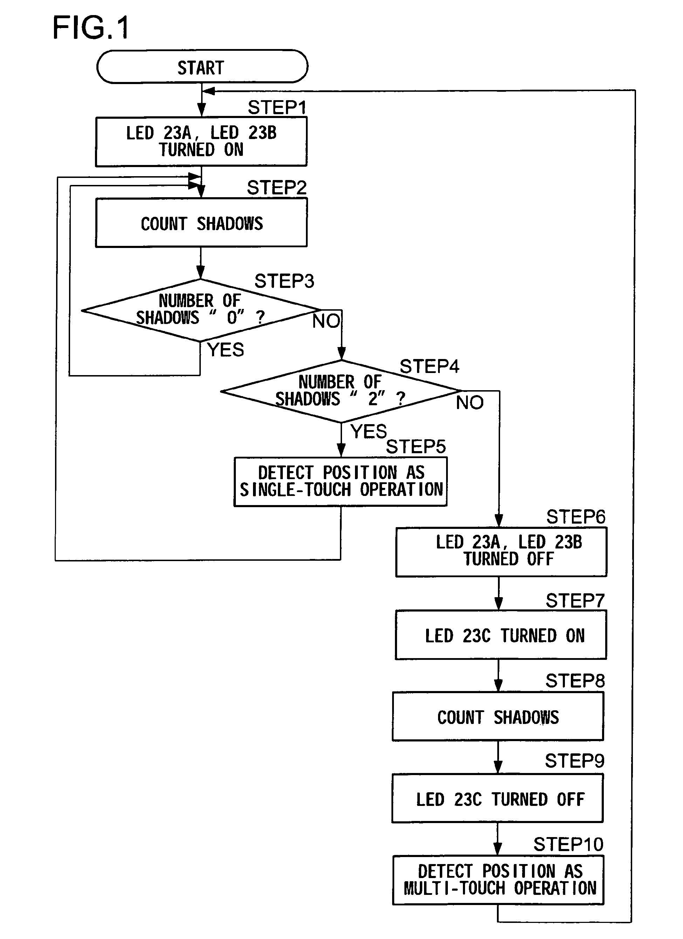

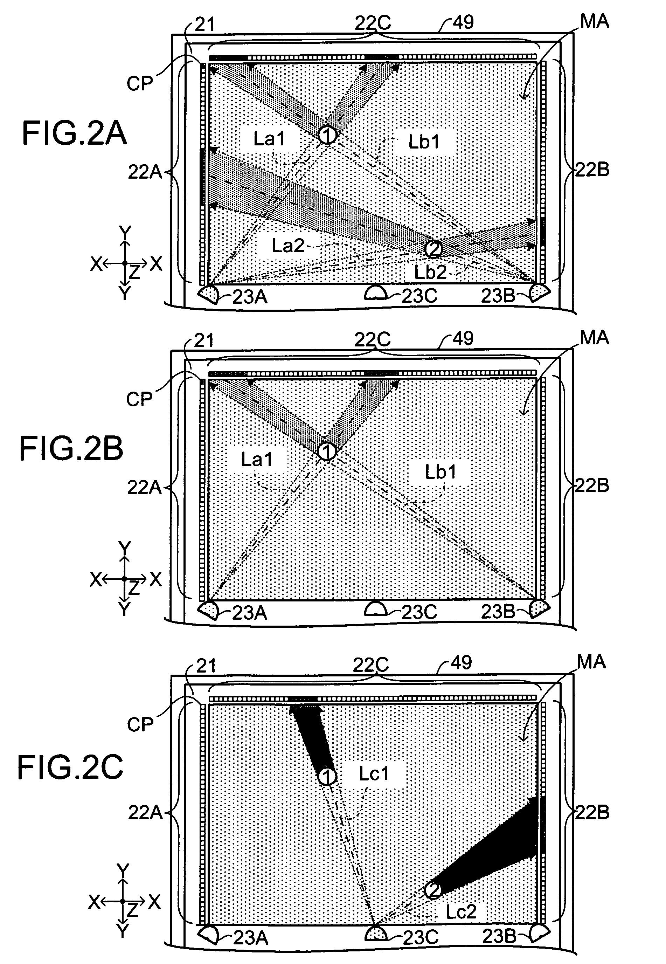

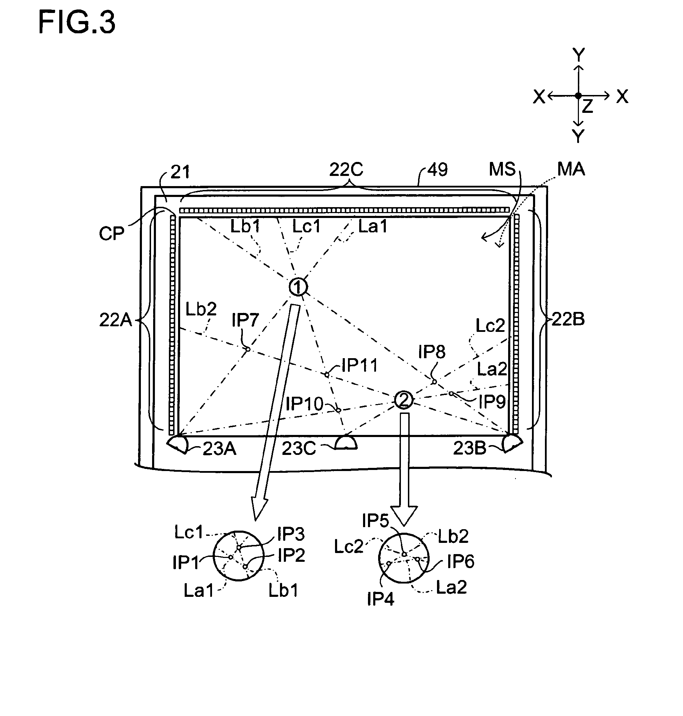

The position determination section 16 determines the position of the target object such as a finger by using data (connection line data) of the connection lines L set by the connection line setting section 15 (position determining process). The process is specifically shown in the flow chart of FIG. 1, the plan views of FIGS. 2A to 2C, and the plan view of FIG. 3 (here, density of the hatching indicating the shadows in FIGS. 2A to 2C is proportional to darkness of the shadows).

First, the detection management section 14 makes the LEDs 23A and 23B emit light via the LED driver 17 as shown in FIG. 1 (STEP 1). Then, as shown in FIG. 2A, light from the LED 23A emitted toward target objects (1) and (2) forms two shadows, and likewise, light from the LED 23B emitted toward the target objects (1) and (2) also forms two shadows. Here, the detection management section 14, counting the shadows based on the light reception data of the line sensor unit 22U, finds that there are a total of four shadows (STEP 2; (shadow counting process)).

Then, the detection management section 14 judges whether the number (the total number) of the shadows formed by the two LEDs 23A and 23B is "0" or not (STEP 3; (target object existence judging process)). If the number of shadow is "0", it is concluded that there is no target object placed on the coordinate map area MA (incidentally, if the number of shadows is "0", the detection management section 14 continues to be able to count the number of shadows; YES in STEP 3).

And, in a case in which the detection management section 14 judges that the number of the shadows is not "0" (NO in STEP3), the detection management section 14 then judges whether or not the number of the shadow is "2" (STEP 4; (target object number judging process)). This judgment is performed to find out whether or not there is only one target object (target object (1) alone); in the case in which the two light sources, namely, the LEDs 23A and 23B emit light, as shown in FIG. 2B, if there is only one target object, only two shadows are formed.

Here, if the detection management section 14 judges that the number of the shadows is "2"(YES in STEP 4), the determined division data related to the two shadows is transmitted to the connection line setting section 15 (determined division data setting process). Then, thereafter, processing for the so-called single-touch operation is carried out on the assumption that there is one target object (STEP 5).

Specifically, the connection line setting section 15, as shown in FIG. 2B, sets a connection line La1 from the determined division data based on the shadow formed by light from the LED 23A, and further, sets a connection line Lb1 from the determined division data based on the shadow formed by light from the LED 23B (connection line setting process). Then data of these connection lines La1 and Lb1 is transmitted from the connection line setting section 15 to the position determination section 16.

The position determination section 16 determines an intersection point IP of the two connection lines L based on the connection line data transmitted from the connection line setting section 15. The position of the intersection point IP is determined, for example, by a triangulation method, by using the reference division E as a fixed point, and a line connecting the reference point E and the division F (which can also be referred to as an X-axis) as a base line. In this way, the position determination section 16 determines the one position of the intersection point IP as the position of the target object (1) (position determining process).

On the other hand, if the detection management section 14 judges that the number of the shadows is not "2" (specifically, if there are three or more shadows) (NO in STEP 4), the detection management section 14 turns off the LEDs 23A and 23B (STEP 6). The detection management section 14 also transmits determined division data related to the three or more shadows to the connection line setting section 15 (determined division data setting process). For example, as shown in FIG. 2A, if four shadows are formed, the detection management section 14 transmits four pieces of determined division data to the connection line setting section 15.

Further, the detection management section 14 turns on the LED 23C via the LED driver 17 (STEP 7). Then, as shown in FIG. 2C, two shadows are formed by light emitted from the LED 23C toward the target objects (1) and (2). Here, the detection management section 14, counting the shadows based on the light reception data of the line sensor unit 22U, judges that there are two shadows (STEP 8; (shadow counting process)). Further, the detection management section 14 also transmits determined division data related to the two shadows to the connection line setting section 15 (here, after the number of the shadows is counted, the detection management section 14 turns off the LED 23C (STEP 9)).

Then, thereafter, processing for the so-called multi-touch operation is carried out on the assumption that there are a plurality of target objects (for example, two) (STEP 10). Specifically, the connection line setting section 15 sets the connection lines La1 and La2 from the determined division data based on the shadows formed by the light from the LED 23A, sets the connection lines Lb1 and Lb2 from the determined division data based on the shadows formed by the light from the LED 23B (connection line setting process). Further, the connection line setting section 15 sets connection lines Lc1 and Lc2 from the determined division data based on the shadows formed by the light from the LED 23C (connection line setting process).

Then, the position determination section 16 determines an intersection point IP of the connection lines L based on the connection line data transmitted from the connection line setting section 15. As a result, as shown in FIG. 3, eleven intersection points IP1 to IP11 are determined (incidentally, drawings pointed at by white arrows are enlarged views of respective parts). Positions of these intersection points IP are determined, for example, by a triangulation method by using the reference division E as a fixed point, and a line connecting the reference division E and the division F as a base line. Then, the position determination section 16 determines two positions where three intersection points IP among the eleven intersection points IP are collected close together (here, a reference value of distance between the three intersection points IP for judging whether or not the three intersection points IP are collected close together is set as necessary).

For example, the position determination section 16 judges that the intersection point IP1 (intersection point of the connection lines La1 and Lb1), the intersection point IP2 (intersection point of the connection lines Lb1 and the Lc1), and the intersection point IP3 (intersection point of the connection lines Lc1 and La1) are collected close together at a position. In addition, the position determination section 16 judges that the intersection point IP4 (intersection point of the connection lines La2 and Lb2), the intersection point IP5 (intersection point of the connection lines Lb2 and Lc2), and the intersection point IP6 (intersection point of the connection lines Lc2 and La2) are collected close together at a position. And these two positions are determined as the positions of the target objects (1) and (2), which are, for example, fingers (position determining process).

That is, the position detection unit 12 including the position determination section 16 judges that a part of an area where the intersection points IP1 to IP3 resulting from the connection line La1 based on the LED 23A, the connection line Lb1 based on the LED 23B, the connection line Lc1 based on the LED 23C intersecting each other is the position of the target object (1), and judges that a part of an area where the intersection points IP4 to IP6 resulting from the connection line La2 based on the LED 23A, the connection line Lb2 based on the LED 23B, and the connection line Lc2 based on the LED 23C intersecting each other is the position of the target object (2).

Here, in a case in which the positions of the target objects (1) and (2) need to be determined more exactly, an area surrounded by the intersection points IP, that is, a barycentric position of a triangular area defined by the intersection points IP1 to IP3 as three vertices and a barycentric position of a triangular area defined by the intersection points IP4 to IP6 as three vertices may be determined as the positions of the target objects (1) and (2).

To sum up, the position detection system PM includes: the LED unit 23U including the plurality of LEDs 23A to 23C; the line sensor unit 22U arranged in a surrounding formation to receive light from the LEDs 23; and the position detection unit 12 which detects a shadow of a target object overlapping an area surrounded by the line sensor unit 22U (that is, the coordinate map area MA) from light reception data of the line sensor unit 22U and detects the position of the target object by a triangulation method by using data (determined division data, connection line data) based on the detected shadow.

And, the position detection unit 12 divides the plurality of LEDs 23A to 23C into a plurality of light source groups, that is, for example, one group (two-LED type light source group) including a plurality of LEDs, namely the LEDs 23A and 23B and another group (one-LED type light source group) including only one LED, namely, the LED 23C, and turns on the LEDs on a group-by-group basis. Further, the position detection unit 12 determines whether or not to carry out a second lighting after a first lighting, according to the total number of shadows of a target object formed by the first lighting and detected by the line sensor unit 22U (that is, the target object existence judging process and the target object number judging process may also be called a lighting determining process).

For example, the detection management section 14 divides the LEDs 23A to 23C into two light source groups, and turns on one of the two light source groups including two light sources, namely the LEDs 23A and 23B in the first lighting. Then, in a case in which the number of shadows formed by the first lighting is "0" or "2", the detection management section 14 does not carry out the next lighting, which would be the second lighting (lighting of the LED 23C), and detects the position of a single target object based on data of the shadows formed by the lighting of the LEDs 23A and 23B.

In the case in which the number of shadows based on the two LEDs 23A and 23B is "0", the number of target objects is normally "0", and thus naturally, position detection does not need to be performed. In the case in which the total number of shadows based on the two LEDs LED 23A and 23B is "2", the number of target objects is "1", and thus, the position of the target object is detected soon with comparatively simple position detection. Thus, with the position detection system PM, in comparison with, for example, with a position detection system in which all LEDs need to be turned on one by one (that is, a plurality times of lighting are required) even for a single target object, the position of the target object is able to be detected sooner.

For example, in a position detection system configured such that three LEDs are turned on and off independently and such that a position of one target object is determined by obtaining an intersection point IP of connection lines L based on shadows formed when the LEDs are turned on, three times of lighting and three times of extinction are carried out (herein, such an example of position detection is referred to as a comparative example 1).

However, as shown in FIG. 1, with the position detection system PM described above, the position of a target object in a single-touch operation can be detected simply by simultaneously turning on the LEDs 23A and 23B. As a result, the position detection process in a single-touch operation performed in this position detection system PM takes less time in comparison with that performed in the comparative example 1 (in short, the period of detection is shorter).

In another position detection system, in a case in which two LEDs are independently turned on or off, and an intersection point IP of connection lines L based on shadows formed when the LEDs are turned on is obtained, to thereby determine the position of a target object, two times of lighting and two times of extinction are carried out (herein, such an example of position detection is referred to as a comparative example 2; see FIG. 12).

However, as shown in FIG. 1, with the position detection system described above, the position of a target object in a single-touch operation can be detected simply by simultaneously turning on the LEDs 23A and 23B. As a result, the position detection process in a single-touch operation performed in this position detection system PM takes less time in comparison with that performed in the comparative example 2.

On the other hand, in the above-described position detection system PM, in the case in which three or more shadows are formed when two light sources, namely, the LEDs 23A and 23B are turned on, next lighting (lighting of the LED 23C), which is the second lighting, is performed. Then, positions of a plurality of target objects are detected based on data of the shadows formed by the lighting of the LEDs 23A and 23B and data of shadows formed by the lighting of the LED 23C.

This helps reduce position-detection time (detection period) taken to detect positions of target objects in a multi-touch operation. In a case in which the number of shadows based on the two LEDs 23A and 23B is "3" or more, the number of target objects is normally "2" or more. Thus, only in such a case, the second lighting necessary for position detection is performed, and by using shadows formed by the second lighting, the position detection unit 12 detects positions of the plurality of target objects. That is, with the position detection system PM, in a case of two or more target objects, positions of the two or more target objects are detected by prolonging the time period for the position detection, but otherwise, position detection is achieved in a reduced period of time.

Furthermore, in the position detecting system PM, as shown in FIG. 1, lighting and extinction are each carried out only twice for detecting positions of target objects in a multi-touch operation. That is, the position detection system PM makes it possible to reduce the time period for the position detection process in a multi-touch operation by approximately 33% in comparison with the above-described comparative example 1.

### [SECOND EMBODIMENT]

A second embodiment will now be described. Such members as function similarly to their counterparts in the first embodiment are identified by common reference signs and no description of them will be repeated.

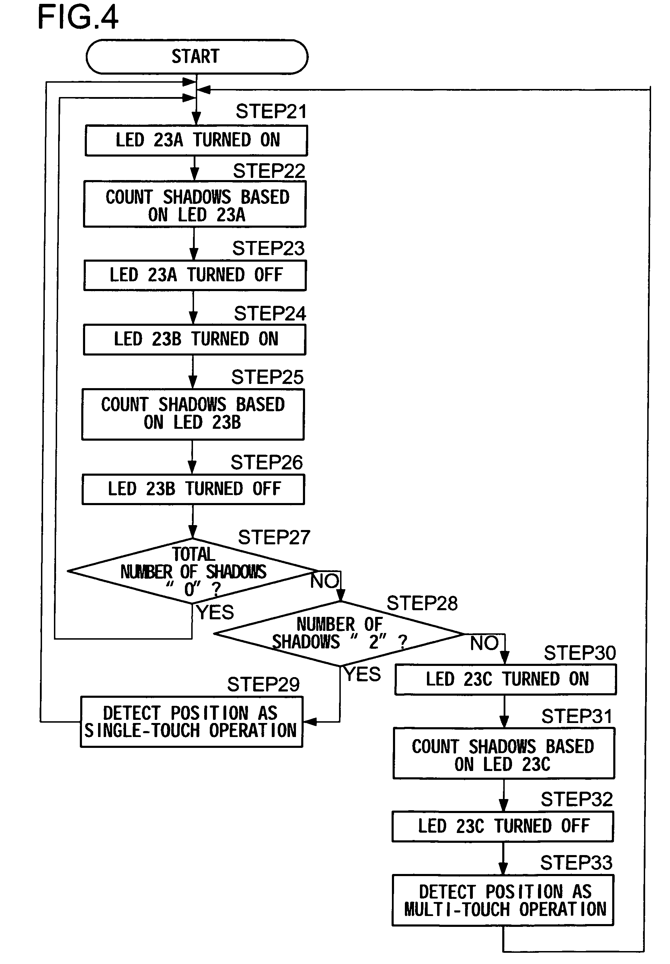

There is another position detection in addition to the position detection performed in the single-touch operation and that performed in the multi-touch operation dealt with in the descriptions of the first embodiment with reference to the flow chart of FIG. 1. An example of such position detection follows the process shown in the flow chart of FIG. 4.

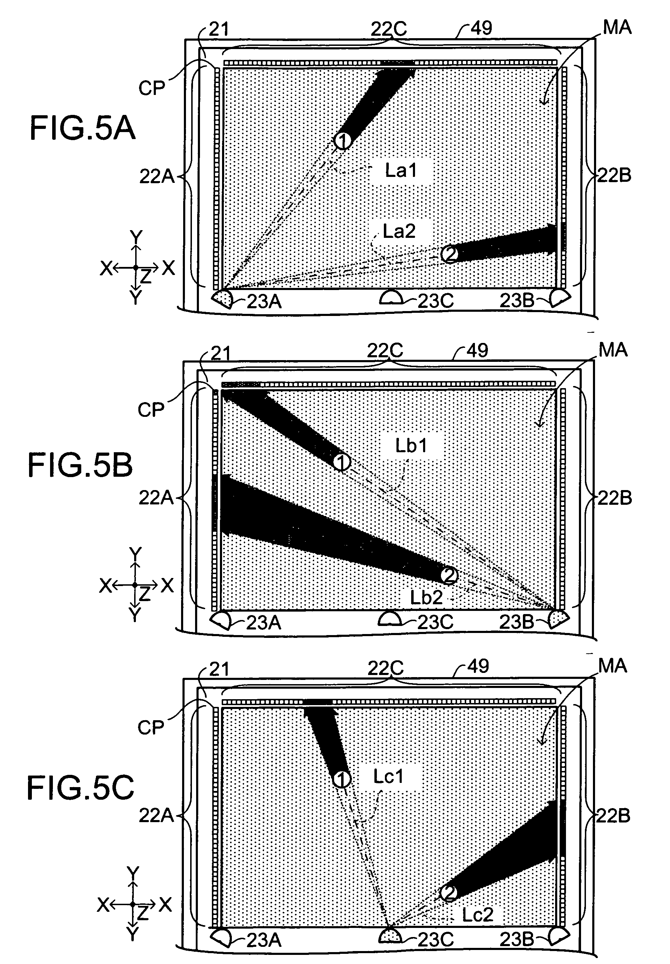

Specifically, in a position detection unit 12, a detection management section 14 turns on an LED 23A via an LED driver 17 as shown in FIG. 4 (STEP 21). Then, as shown in FIG. 5A, two shadows are formed by light emitted from the LED 23A toward target objects (1) and (2). Here, the detection management section 14, counting shadows based on light reception data of a line sensor unit 22U, judges that there are two shadows (STEP 22; (shadow counting process)). Then, the detection management section 14 turns off the LED 23A (STEP 23).

Next, the detection management section 14 turns on an LED 23B via the LED driver 17 (STEP 24). Then, as shown in FIG. 5B, two shadows are formed by light from the LED 23B emitted toward the target objects (1) and (2). Here, the detection management section 14, counting shadows based on light reception data of the line sensor unit 22U, judges that there are two shadows (STEP 25; (shadow counting process)). Then, the detection management section 14 turns off the LED 23B (STEP 26).

Here, the detection management section 14 counts shadows based on the LED 23A and counts shadows based on the LED 23B, and judges whether the total number of the shadows is "0" or not (step 27; (target object existence judging process)). For example, if the total number of the shadows is "0", there is no target object placed on the coordinate map area MA, and thus the detection management section 14 turns on the LED 23A again, and continues to be able to count the number of shadows (YES in STEP 27).

Furthermore, if the detection management section 14 judges that the number of the shadows is not "0", then the detection management section 14 judges whether or not the number of the shadows is "2" (STEP 28; (target object number judging process)). For example, if the number of the shadows is "2", one shadow is formed based on the LED 23A, and one shadow is formed based on the LED 23B as well, and thus there is only one target object. In such a case, that is, if the detection management section 14 judges that the number of the shadows is "2" (YES in STEP 28), determined division data related to the two shadows is transmitted to the connection line setting section 15 [determined division data setting process]. Then, thereafter, processing for the so-called single-touch operation is carried out on the assumption that there is one target object (STEP 29).

Specifically, a connection line setting section 15 sets a connection line La1 from the determined division data based on the shadow formed by the light from the LED 23A, sets a connection line Lb1 from the determined division data based on the shadow formed by the light from the LED 23B (connection line setting process). Then data of these connection lines La1 and Lb1 is transmitted from the connection line setting section 15 to a position determination section 16. Then, the position determination section 16 determines intersection points of the connection lines L based on the connection line data transmitted from the connection line setting section 15, and determines one of the intersection points as a position of a target object (1).

On the other hand, if the detection management section 14 judges that the number of the shadows is not "2" (specifically, three or more) (NO in STEP 28), determined division data related to the three or more shadows is transmitted to the connection line setting section 15 [determined division data setting process]. For example, as shown in FIGS. 5A and 5B, in a case in which a total of four shadows are formed by the two times of lighting of the LEDs, the detection management section 14 transmits four pieces of determined division data to the connection line setting section 15. Then, as shown in FIG. 5C, the detection management section 14 turns off the LED 23A (STEP 30).

Then, two shadows are formed by the light emitted from the LED 23C toward target objects (1) and (2). Here, the detection management section 14, counting the number of the shadows based on the light reception data of the line sensor unit 22U, judges that there are two shadows (STEP 31; (shadow counting process)). Further, the detection management section 14 also transmits determined division data related to the two shadows to the connection line setting section 15 (here, after the counting of the shadows, the detection management section 14 turns off the LED 23C (STEP 32)).

Then, thereafter, processing for the so-called multiple-touch operation is carried out on the assumption that there are a plurality of target objects (for example, two target objects) (STEP 33). Specifically, the connection line setting section 15 sets connection lines L (La1, Lb1, Lc1, La2, Lb2, Lc2) from the determined division data based on the shadows formed by the light emitted from the LEDs 23A to 23C (connection line setting process). Then, the position determination section 16 determines an intersection point IP of the connection lines L based on the connection line data transmitted from the connection line setting section 15. Then, as shown in FIG. 3 which has already been referred to above, the position determination section 16 determines two positions where three intersection points IP among the eleven intersection points IP are collected close together. And these two positions are determined as the positions of the target objects (1) and (2), which are, for example, fingers (position determining process).

To sum up, the position detection unit 12 divides the plurality of LEDs 23A to 23C into a plurality of light source groups, that is, for example, one group (one-LED type light source group) including a single LED 23, which is specifically the LED 23A, one group (one-LED type light source group) including another single LED 23, which is specifically the LED 23B, and one group (one-LED type light source group) including the other single LED 23, which is specifically the LED 23C, and turns on the LEDs on a group-by-group basis. Further, the position detection unit 12 determines whether or not to carry out a next lighting, according to the total number of shadows of the target objects formed by the first and second lighting and detected by the line sensor unit 22U (that is, the target object existence judging process and the target object number judging process may also be called a lighting determining process).

That is, the detection management section 14 treats the LEDs 23A to 23C as three independent LEDs, and first turns on the LED 23A in the first lighting, and then turns on the LED 23B in the second lighting. Then, in a case in which the number of the shadows formed by the first lighting and the second lighting is "0" or "2", the detection management section 14 does not carry out the next lighting, which would be a third lighting (lighting of the LED 23C), and detects the position of a single target object based on data of the shadows formed by the lighting of the LEDs 23A and 23B.

This makes it possible to detect the position of a target object in the single-touch operation as shown in FIG. 4 in a comparatively short period of time as in the first embodiment (for example, in comparison with a case in which three LEDs are independently turned on as in the above-described comparative example 1 to thereby perform position detection in the single-touch operation, the position detection of a target object in the single-touch operation shown in the flow chart of FIG. 4 takes shorter period of time.)

On the other hand, in the above-described position detection system PM, if the total number of the shadows formed by the first lighting in which the LED 23A is turned on and the second lighting in which the LED 23B is turned on is three or more, another lighting, which is the third lighting, is carried out, and positions of a plurality of target objects are detected by using data of the shadows formed by the first lighting and the second lighting in which the LEDs 23A and 23B are turned on, respectively, and data of the shadows formed by the third lighting in which the LED 23C is turned on and by lighting following the third lighting.

In this system, as shown in FIGS. 5A to 5C, the target objects (1) and (2) are constantly illuminated by the single LED 23, and thus darkness (shade) of the shadows detected by the line sensor unit 22U is dense. That is, a shadow formed by one LED 23 is never illuminated by another LED 23. This helps enhance the accuracy with which the line sensor unit 22U detects shadows (that is, the accuracy of the determined division data), and thus helps to enhance the accuracy of connection line data. As a result, the accuracy of the position of a target object obtained from intersection points IP of connection line data (connection lines L) is also enhanced.

Here, an assumed example of a multi-touch operation in which position detection is performed with respect to target objects is a gesture operation by using, for example, fingers. Such a gesture operation is not performed so fast as, for example, a pen-input operation. Thus, even if the time taken for position detection in a multi-touch operation in the second embodiment (see FIG. 4) is longer than that in the first embodiment (see FIG. 1), it will have only a minor adverse effect (it goes without saying that it is more desirable if position detection is performed in a short time as in the multi-touch operation in the first embodiment).

### [OTHER EMBODIMENTS]

It should be noted that the embodiments specifically described above are not meant to limit the present invention, and that many variations and modifications can be made within the spirit of the present invention.

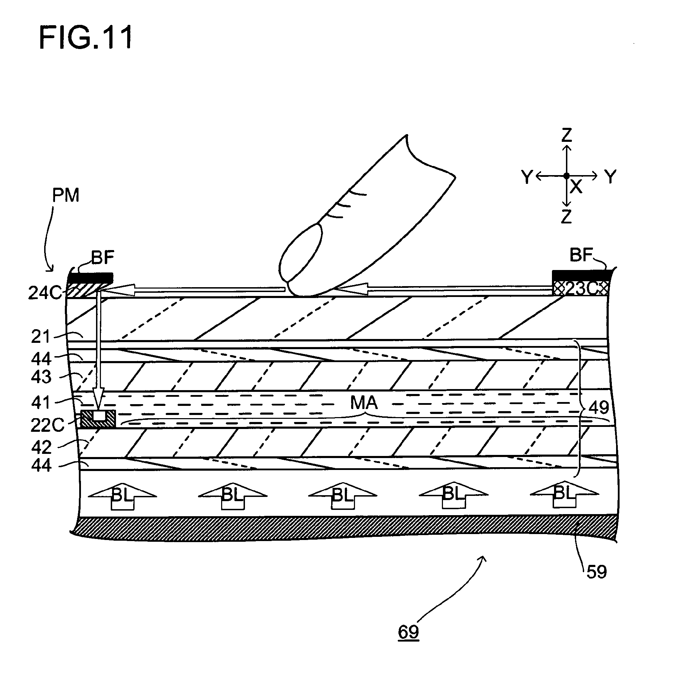

For example, the line sensor unit 22U in the position detection system PM is not limited to be located on a protection substrate 21 as shown in FIGS. 6 and 7, and the like. For example, the position detection system PM can be as shown in FIG. 11.

Specifically, in the positions of the line sensors 22A, 22B, and 22C, which are located on the protection substrate in FIGS. 6 and 7 and the like, linear-shaped reflection mirrors 24A, 24B, and 24C are placed, respectively. Furthermore, the line sensors 22A to 22C are arranged on the active matrix substrate 42, overlapping the reflection mirrors 24A to 24C, respectively.

These reflection mirrors 24A to 24C (a reflection mirror set 24U) are arranged such that a mirror surface of the reflection mirror 24A is so tilted as to be able to receive light from the LED unit 23U and is also pointed to the light receiving surface of the line sensor 22A, such that a mirror surface of the reflection mirror 24B is so tilted as to be able to receive light from the LED unit 23U and is also pointed to the light receiving surface of the line sensor 22B, and further, such that a mirror surface of the reflection mirror 24C is so tilted as to be able to receive light from the LED unit 23U and is also pointed to the light receiving surface of the line sensor 22C.

Incidentally, with the liquid crystal display panel 49 including the position detection system PM having this configuration, the coordinate map area MA is formed on the active matrix substrate 42. However, the protection substrate 21 is so arranged as to cover the coordinate map area MA, and thus a target object placed on the protection substrate 21 overlaps the coordinate map area MA. Thus, even in the position detection system PM shown in FIG. 11, a shadow is formed when light from the LED unit 23U is shone onto a target object and the line sensor unit 22U receives light reception data which has changed according to the shadow.

In the case of a single-touch operation as shown in FIG. 2B, the number of the shadows attributable to the target object (1) is "2", but if, for example, the target object (1) is located close to the line sensor 22C, the line sensor unit 22U may erroneously detect only one shadow when the LEDs 23A and 23B are turned on.

In view of such a case, it is preferable to add a judgment step such as "Is number of shadow "1"?" between "NO" in STEP 4 and STEP 6.

The descriptions hereinabove deal with the LED 23 which is a light emitting device as a point light source, but this is not meant as a limitation. For example, other light emitting devices such as a laser device or an organic or inorganic EL (Electro-Luminescence) formed with self-luminous materials may be adopted. The point light source is not limited to light emitting devices, but a point light such as a lamp may be adopted as the point light source.

The descriptions hereinabove deal with the liquid crystal display device 69 as an example of a display device, but this is not meant as a limitation. For example, the position detection system PM may be installed in other types of display devices such as a plasma display device and an electronic blackboard.

Note that the position detection described above is accomplished by a position detection program. This program is executable on a computer, and may be recorded on a storage medium readable by a computer. This is because the program recorded in the recording medium is portable.

Incidentally, examples of the recording medium include a separable tape-type medium such as a magnetic tape or a cassette tape, a disc-type medium such as a magnetic disc or an optical disc such as a CD-ROM, a card-type medium such as an IC card (including a memory card) or an optical card, and a semiconductor memory-type medium such as a flash memory.

Further, the microcomputer unit 11 may acquire a position detection control program by communicating with a communication network. Examples of the communication network include, whether wired or not, the Internet, infrared communication, etc.

### List of Reference Symbols

- PM: position detection system
- 11: microcomputer unit
- 12: position detection unit
- 13: memory
- 14: detection management section
- 15: connection line setting section
- 16: position determination section;
- 17: LED driver
- 21: protection sheet
- 22: line sensor (light receiving sensor)
- 22A: line sensor
- 22B: line sensor
- 22C: line sensor
- 22U: line sensor unit (light receiving sensor unit)
- MA: coordinate map area
- 23: LED (light source)
- 23U: LED unit (light source unit)
- L: connection line
- IP: intersection point
- 49: liquid crystal display panel (display panel, touch panel)
- 59: backlight unit (illumination device)
- 69: liquid crystal display device (display device)

## Claims

1. A position detection system, comprising:
a light source unit including a plurality of light sources;
a light receiving sensor unit which is arranged in a surrounding shape and receives light from the light sources; and
a position detection unit which detects, from light reception data of the light receiving sensor unit, a shadow of a target object which overlaps an area surrounded by the light receiving sensor unit, the position detection unit detecting a position of the target object by a triangulation method by using data based on the shadow,
wherein
the position detection unit divides the plurality of light sources into a plurality of light source groups and performs lighting of the light sources on a group-by-group basis such that, according to a total number of shadows formed at a first lighting based on the target object and detected by the light receiving sensor unit, or according to a total number of shadows formed at first and second lighting based on the target object and detected by the light receiving sensor unit, the position detection unit determines whether or not to perform a next lighting.

2. The position detection system of Claim 1,
wherein
one of the plurality of light source groups is a two-light-source type light source group including two light sources; and
the total number of shadows formed at the first lighting in which the light sources of the two-light-source type light source group are turned on is "0" or "2", a next lighting, which would be the second lighting, is not performed, and a position of a single target object is detected by using data of the shadows formed when the light sources included in the two-light-source type light source group are turned on.

3. The position detection system of claim 2,
wherein,
in a case in which three or more shadows are formed at the first lighting in which the light sources included in the two-light-source type light source group are turned on, the next lighting in which a light source included in another light source group is turned on is performed as the second lighting; and
positions of a plurality of target objects are detected based on data of the shadows formed when the light sources of the two-light-source type light source group are turned on, data of shadows formed at the second lighting, and data of shadows formed at lighting performed after the second lighting by turning on a light source of another light source group.

4. The position detection system of claim 1,
wherein
two of the plurality of groups are one-light-source type light source groups each including a light source; and
in a case in which the total number of shadows formed at a first lighting in which the light source of one of the one-light-source type light source groups is turned on and at a second lighting in which the light source of the other one of the one-light-source type light source groups is turned on is "0" or "2", a next lighting, which would be a third lighting, is not performed, and a position of a single target object is detected by using data of the shadows formed at the first and second lighting in which the light source of the one of the two one-light-source type light source groups and the light source of the other one of the two one-light-source type light source groups are turned on, respectively.

5. The position detection system of claim 4,
wherein,
in a case in which the total number of shadows formed at the first lighting in which the one of the one-light-source type light source groups is turned on and the second lighting in which the other one of the one-light-source type light source groups is turned on is three or more, the next lighting is performed as the third lighting; and
positions of a plurality of target objects are detected based on data of the shadows formed at the first and second lighting in which the light sources of the one-light-source type light source groups are turned on, and data of shadows formed at the third lighting, and data of shadows formed at lighting performed after the third lighting by turning on a light source of another one-light-source type light source group.

6. A display panel comprising the position detection system of any one of claims 1 to 5.

7. A display device comprising the display panel of claim 6.
